# EUROPEAN PATENT APPLICATION

(11) **EP 4 757 134 A1**
(43) Date of publication of application: **10.06.2026**
(21) Application number: 24867869.0
(22) Date of filing: 03.07.2024
(51) Int. Cl.: H02K 5/10

(54) **UNIT**

(30) Priority: 22.09.2023 JP 2023158470
(71) Applicant: Jatco Ltd., Shizuoka 417-8585 (JP)
(72) Inventor: YOKOYAMA, Kazuhiko, Fuji-shi, Shizuoka 417-8585 (JP); TANAKA, Yuuki, Fuji-shi, Shizuoka 417-0002 (JP); YAGI, Hidekazu, Fuji-shi, Shizuoka 417-8585 (JP); SHOICHI, Minoru, Fuji-shi, Shizuoka 417-8585 (JP); UEHARA, Hiroki, Fuji-shi, Shizuoka 417-8585 (JP)
(74) Representative: Hoefer & Partner Patentanwälte mbB
(86) International application number: PCT/JP2024/024040
(87) International publication number: WO 2025/062785

(57) **Abstract**

[Problems] To enable more effective prevention of the oil from being scattered to the outside of the unit when the breather is provided in the unit.

[Solutions] The unit includes the housing having the motor accommodating chamber accommodating the motor and the inverter accommodating chamber accommodating the inverter, wherein the inverter accommodating chamber has: the first bottom surface portion also serving as the peripheral wall portion, the peripheral wall portion being configured to surround the outer circumference of the motor; and the second bottom surface portion and the third bottom surface portion respectively arranged so as to sandwich the first bottom surface portion, the control board of the inverter is arranged on the second bottom surface portion side, and the outlet of the breather is arranged on the third bottom surface portion side.

## Description

### TECHNICAL FIELD

The present invention relates to a unit.

### BACKGROUND ART

Patent Documents 1 to 4 disclose various arrangements of breathers that communicate between the inside and the outside of a housing (a case) to reduce a pressure difference between the inside and the outside of the housing.

### PRIOR ART DOCUMENT

### PATENT DOCUMENT

Patent Document 1: JP 2012-082930 A
Patent Document 2: JP 2016-019436 A
Patent Document 3: JP H8-065945 A
Patent Document 4: JP H9-182352 A

### SUMMARY OF INVENTION

### PROBLEMS TO BE SOLVED BY THE INVENTION

In a housing accommodating a speed reduction mechanism, which is mounted on a vehicle, it is generally practiced to provide breathers as described above. Here, it is conceivable to arrange an outlet of the breather in a sealed space inside a unit so that oil inside the housing of the unit does not spurt outside the unit via the outlet of the breather. However, in a case in which a component, to which it is undesirable for the oil to adhere, is provided in the sealed space, it becomes necessary to prevent the oil from adhering to the component.

The present invention has been made in view of such a technical problem, and an object thereof is to enable prevention of oil from adhering to a component, to which it is undesirable for the oil to adhere, in a sealed space when a breather is provided in the sealed space inside the unit.

### MEANS FOR SOLVING THE PROBLEM

According to an aspect of the present invention, a unit including a housing having a motor accommodating chamber accommodating a motor and an inverter accommodating chamber accommodating an inverter is provided, wherein the inverter accommodating chamber has: a first bottom surface portion also serving as a peripheral wall portion, the peripheral wall portion being configured to surround an outer circumference of the motor; and a second bottom surface portion and a third bottom surface portion respectively arranged so as to sandwich the first bottom surface portion, a control board of the inverter is arranged on the second bottom surface portion side, and an outlet of a breather is arranged on the third bottom surface portion side.

### EFFECT OF THE INVENTION

According to the above aspect, the second bottom surface portion and the third bottom surface portion are respectively arranged so as to sandwich the first bottom surface portion. With such a configuration, even if oil is discharged from the outlet of the breather that is arranged on the third bottom surface portion side, the movement of the oil beyond the first bottom surface portion to the second bottom surface portion is made difficult, and the oil tends to remain on the third bottom surface portion. Therefore, it is possible to retain the oil that has discharged from the outlet of the breather on the third bottom surface portion inside the inverter accommodating chamber without guiding the oil to the control board of the inverter that is arranged on the second bottom surface portion side. Thus, according to the above-described aspect, when the breather is provided in the sealed space inside the unit, it is possible to prevent the oil from adhering to the control board of the inverter, which is a component to which it is undesirable for the oil to adhere.

### BRIEF DESCRIPTION OF DRAWINGS

[FIG. 1] FIG. 1 is a diagram of a unit according to an embodiment of the present invention as viewed from above.
[FIG. 2] FIG. 2 is a sectional view taken along line II-II of FIG. 1.
[FIG. 3] FIG. 3 is a sectional view taken along line III-III of FIG. 1.
[FIG. 4] FIG. 4 is a sectional view taken along line IV-IV of FIG. 1.

### DESCRIPTION OF EMBODIMENTS

A unit 100 according to an embodiment of the present invention will be described below with reference to the attached drawings.

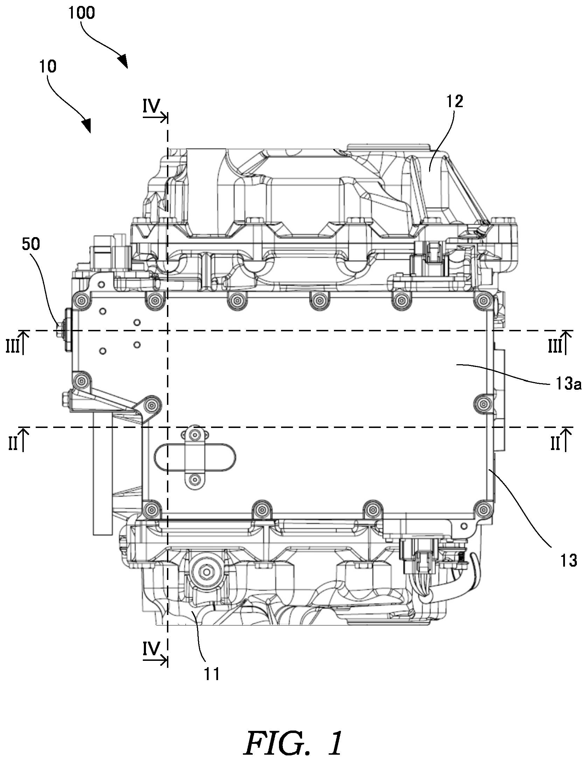

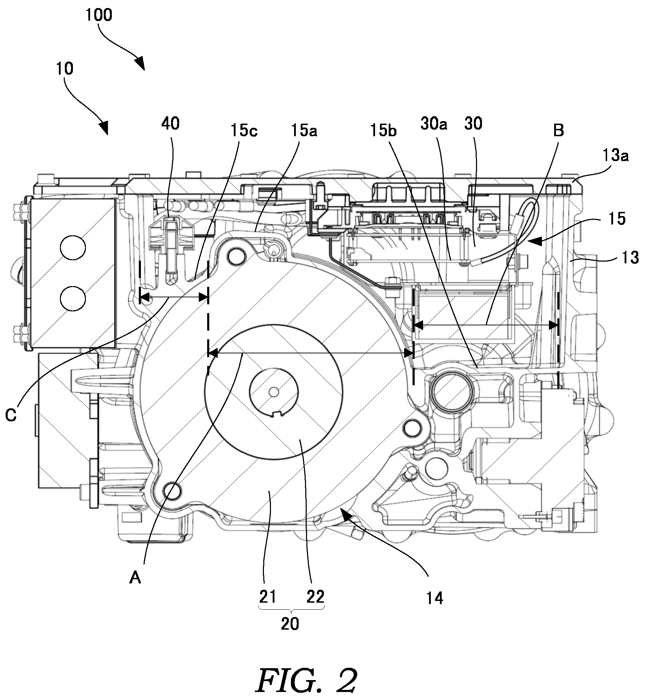

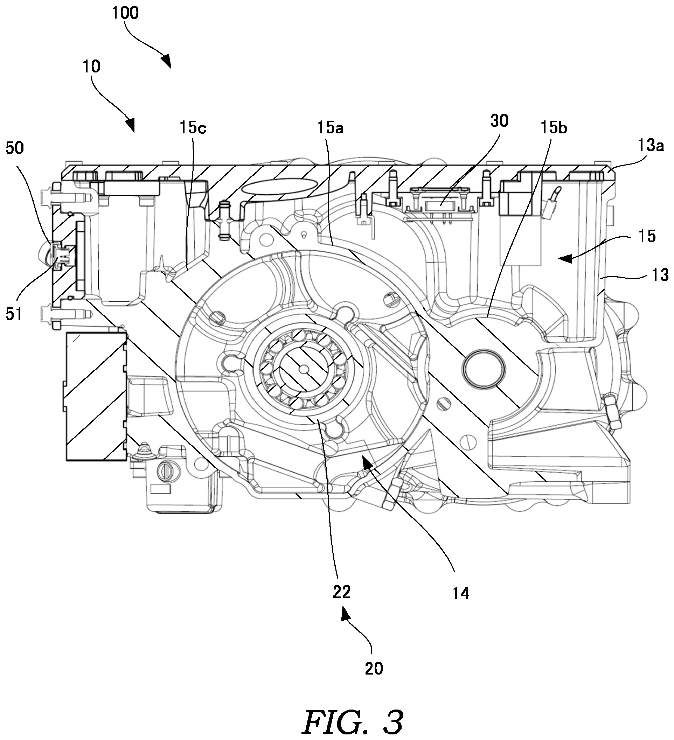

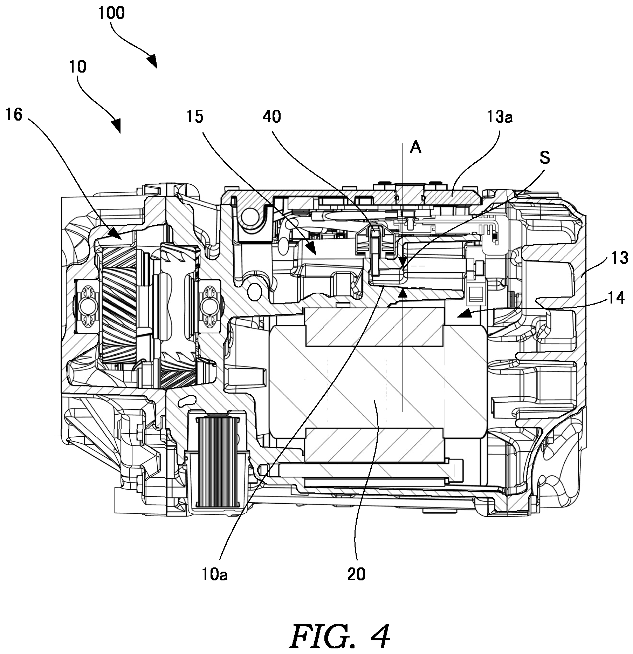

FIG. 1 is a diagram of the unit 100 according to this embodiment as viewed from above. FIG. 2 is a sectional view taken along line II-II of FIG. 1. FIG. 3 is a sectional view taken along line III-III of FIG. 1. FIG. 4 is a sectional view taken along line IV-IV of FIG. 1. In FIG. 1, the direction orthogonal to the paper surface corresponds to the direction of gravity. In FIGs. 2 to 4, the up-down direction corresponds to the direction of gravity.

Regarding the term "unit", the unit can also be referred to as, for example, a motor unit (a unit including at least a motor) or a motive force transmission device (a device including at least a motive force transmission mechanism). The motor is a rotating electric machine having an electric motor function and/or a generator function (at least one of the electric motor function or the generator function). The motive force transmission mechanism is, for example, a gear mechanism and/or a differential gear mechanism. The device (unit) including the motor and the motive force transmission mechanism is included in both concepts of a motor unit and a motive force transmission device.

As shown in FIG. 1, the unit 100 includes a housing 10 that has a first cover 11, a second cover 12, and a case 13. The unit 100 is mounted on a vehicle, and the vehicle is an electric vehicle. The first cover 11 closes an opening of the cylindrical case 13 from one side in the axial direction (the lower side in FIG. 1), and the second cover 12 closes an opening of the case 13 from the other side in the axial direction. In addition, the case 13 has a third cover 13a that closes an opening on an upper side in the direction of gravity.

The unit 100 further includes a motor 20, an inverter 30, a speed reduction mechanism (not shown), and a differential gear (not shown). As shown in FIGs. 2 and 3, the housing 10 has a motor accommodating chamber 14 that accommodates the motor 20 and an inverter accommodating chamber 15 that accommodates the inverter 30. In addition, the speed reduction mechanism and the differential gear are accommodated in a gear accommodating chamber 16 (see FIG. 4) inside the second cover 12. The inverter 30 is electrically connected to the motor 20 and a battery (not shown).

As shown in FIGs. 2 and 3, the motor 20 has a stator 21 that is provided and fixed to the case 13, and a rotor 22 that is rotatable on the inner side of the stator 21, and the motor 20 constitutes a drive source of the vehicle.

The unit 100 has oil inside the housing 10, and the oil is supplied, for example, to the speed reduction mechanism and the differential gear inside the second cover 12 to lubricate gears inside the speed reduction mechanism and the differential gear. In addition, the oil is also supplied, for example, to the motor 20 inside the case 13 to lubricate the motor 20. Therefore, the oil lubricating the motor 20 exists in a state of liquid, foam, or atomized mist in the motor accommodating chamber 14.

The inverter accommodating chamber 15 has a first bottom surface portion 15a also serving as a peripheral wall portion that surrounds an outer circumference of the motor 20, and a second bottom surface portion 15b and a third bottom surface portion 15c that are arranged on both sides of the first bottom surface portion 15a so as to sandwich the first bottom surface portion 15a.

Specifically, as shown by arrow A in FIG. 2, the first bottom surface portion 15a surrounds the highest part of the outermost peripheral portion of the motor 20 in the direction of gravity. Both ends of the first bottom surface portion 15a correspond to broken line portions of the peripheral wall portion of the motor 20 adjacent to the arrow A in FIG. 2, for example.

In addition, as shown by arrow B in FIG. 2, the second bottom surface portion 15b forms a bottom surface extending from the peripheral wall portion of the motor 20 at the right end of the first bottom surface portion 15a to the wall portion on the right side of the inverter accommodating chamber 15. The third bottom surface portion 15c forms a bottom surface extending from the peripheral wall portion of the motor 20 at the left end of the first bottom surface portion 15a to the wall portion on the left side of the inverter accommodating chamber 15.

In addition, the inverter 30 is arranged above the second bottom surface portion 15b of the inverter accommodating chamber 15. A breather 40, which reduces a pressure difference by causing the inside of the sealed motor accommodating chamber 14 and the inverter accommodating chamber 15 to communicate with each other, is provided above the third bottom surface portion 15c of the inverter accommodating chamber 15. Specifically, as shown in FIG. 4, the breather 40 is provided such that the inverter accommodating chamber 15 and the motor accommodating chamber 14 are communicated with each other on the gear accommodating chamber 16 side of an opening portion S formed in the motor accommodating chamber 14 of the housing 10. The width of the opening portion S is the same as a range between arrows A in FIG. 4. The breather 40 is provided such that the inlet thereof is provided on the motor accommodating chamber 14 side and the outlet thereof is provided on the inverter accommodating chamber 15 side.

Between the second bottom surface portion 15b and the third bottom surface portion 15c, as described above, the first bottom surface portion 15a surrounding the highest part of the outermost peripheral portion of the motor 20 in the direction of gravity is arranged. Therefore, even if the oil from the motor accommodating chamber 14 is discharged to the inverter accommodating chamber 15 via the breather 40, movement of the oil (particularly liquid or foam oil) from the third bottom surface portion 15c to the second bottom surface portion 15b beyond the first bottom surface portion 15a is suppressed. As a result, even if the oil is discharged from the breather 40 to the inverter accommodating chamber 15, the oil tends to remain on the third bottom surface portion 15c, and it is possible to suppress the oil from flowing toward the side of the inverter 30 that is arranged above the second bottom surface portion 15b.

In addition, an outside breathing hole 50 provided with a filter 51 having air permeability is formed on the outer wall of the inverter accommodating chamber 15 on the third bottom surface portion 15c side. The outside breathing hole 50 reduces the pressure difference between the inside and the outside of the housing 10 by causing the inverter accommodating chamber 15 and the outside of the housing 10 to communicate with each other, and guides the oil (particularly mist oil) contained in the air in the inverter accommodating chamber 15 to the outer wall of the inverter accommodating chamber 15 on the third bottom surface portion 15c side where the filter 51 is located.

Furthermore, if the oil from the motor accommodating chamber 14 is discharged to the inverter accommodating chamber 15 via the breather 40, the pressure in the inverter accommodating chamber 15 tends to become positive pressure due to the inflow of oil and air from the motor accommodating chamber 14. Therefore, the air in the inverter accommodating chamber 15 tends to flow to the outside of the housing 10 via the outside breathing hole 50. As a result, the oil that flowed from the breather 40 to the inverter accommodating chamber 15 is guided to the outer wall of the inverter accommodating chamber 15 on the third bottom surface portion 15c side, and so, the flow of the oil toward the inverter 30 side is more effectively suppressed.

In addition, in a case in which the oil has gradually accumulated over time on the third bottom surface portion 15c side of the inverter accommodating chamber 15, it is possible to discharge the oil accumulated on the third bottom surface portion 15c by performing a maintenance work of sucking out the oil from the outside breathing hole 50 by removing the filter 51, which is provided removably.

Main operational advantages of the unit 100 according to the embodiment of the present invention will be collectively described below.
(1) The unit 100 includes the housing 10 having the motor accommodating chamber 14 accommodating the motor 20 and the inverter accommodating chamber 15 accommodating the inverter 30. The inverter accommodating chamber 15 has: the first bottom surface portion 15a also serving as the peripheral wall portion, the peripheral wall portion being configured to surround the outer circumference of the motor 20; and the second bottom surface portion 15b and the third bottom surface portion 15c respectively arranged so as to sandwich the first bottom surface portion 15a, a control board 30a of the inverter 30 is arranged on the second bottom surface portion 15b side, and the outlet of the breather 40 is arranged on the third bottom surface portion 15c side.
   According to this configuration, the second bottom surface portion 15b and the third bottom surface portion 15c are respectively arranged so as to sandwich the first bottom surface portion 15a. With such a configuration, even if the oil is discharged from the outlet of the breather 40 that is arranged on the third bottom surface portion 15c side, the movement of the oil beyond the first bottom surface portion 15a to the second bottom surface portion 15b is made difficult, and the oil tends to remain on the third bottom surface portion 15c. Therefore, it is possible to retain the oil that has discharged from the outlet of the breather 40 on the third bottom surface portion 15c inside the inverter accommodating chamber 15 without guiding the oil to the control board 30a of the inverter 30 that is arranged on the second bottom surface portion 15b side. Thus, according to the above-described aspect, when the breather 40 is provided in the sealed space of the unit 100, it is possible to prevent the oil from adhering to the control board 30a of the inverter 30, which is a component to which it is undesirable for the oil to adhere.
(2) The filter 51 having the air permeability is provided on the outer wall of the inverter accommodating chamber 15 on the third bottom surface portion 15c side.
   According to this configuration, even if the oil that has discharged from the outlet of the breather 40 is the mist oil that tends to be scattered, the mist oil can be adsorbed by the filter 51 having the air permeability that is provided on the outside of the inverter accommodating chamber 15 on the third bottom surface portion 15c side, and so, it is possible to suppress the oil from flowing toward the inverter 30 side. In addition, when the pressure in the inverter accommodating chamber 15 becomes positive pressure due to the oil being discharged from the outlet of the breather 40, the air in the inverter accommodating chamber 15 tends to flow to the outside of the housing 10 from the outside breathing hole 50. As a result, the mist oil that has discharged from the outlet of the breather 40 is guided toward the outside of the inverter accommodating chamber 15 on the third bottom surface portion 15c side, and so, it is possible to suppress the flow of the oil toward the inverter 30 side more effectively. Thus, according to the above-described aspect, it is possible to more effectively prevent the oil from adhering to the control board 30a of the inverter 30.
(3) The filter 51 is provided on the outer wall so as to be removable.
   According to this configuration, by performing the maintenance work of sucking out the oil from the outside breathing hole 50 by removing the filter 51, it is possible to easily discharge the oil that has accumulated on the third bottom surface portion 15c, and so, it is possible to more effectively prevent the oil from adhering to the control board 30a of the inverter 30.

Although the embodiment of the present invention has been described in the above, the above-mentioned embodiment merely illustrates a part of application examples of the present invention, and the technical scope of the present invention is not intended to be limited to the specific configurations of the above-described embodiment.

### DESCRIPTION OF REFERENCE SIGNS

100: unit
10: housing
14: motor accommodating chamber
15: inverter accommodating chamber
15a: first bottom surface portion
15b: second bottom surface portion
15c: third bottom surface portion
20: motor
30: inverter
30a: control board
40: breather
51: filter

## Claims

1. A unit comprising a housing having a motor accommodating chamber accommodating a motor and an inverter accommodating chamber accommodating an inverter, wherein
the inverter accommodating chamber has:
a first bottom surface portion also serving as a peripheral wall portion, the peripheral wall portion being configured to surround an outer circumference of the motor; and
a second bottom surface portion and a third bottom surface portion respectively arranged so as to sandwich the first bottom surface portion,
a control board of the inverter is arranged on the second bottom surface portion side, and
an outlet of a breather is arranged on the third bottom surface portion side.

2. The unit according to claim 1, wherein
a filter having an air permeability is provided on an outer wall of the inverter accommodating chamber on the third bottom surface portion side.

3. The unit according to claim 2, wherein
the filter is provided on the outer wall so as to be removable.
